# EUROPÄISCHE PATENTSCHRIFT

(11) **EP 0 501 943 B1**
(45) Veröffentlichungstag und Bekanntmachung des Hinweises auf die Patenterteilung: **07.02.1996**
(21) Anmeldenummer: 92890025.7
(22) Anmeldetag: 03.02.1992
(51) Int. Cl.: G01B 11/08, G01B 11/10

(54) **Messförderer einer optoelektronischen Messeinrichtung**
Conveyor of a optoelectronic measuring arrangement
Convoyeur d'un arrangement de mesure optoélectronique

(30) Priorität: 28.02.1991 AT 420/91
(43) Veröffentlichungstag der Anmeldung: 02.09.1992
(73) Patentinhaber: GEC ALSTHOM T&D GESELLSCHAFT m.b.H., A-4020 Linz (AT)
(72) Erfinder: Augl, Helmut, A-4020 Linz (AT); Rossboth, Werner Heinz, Ing., A-4040 Linz (AT)
(74) Vertreter: Rossboth, Werner Heinz

(56) Entgegenhaltungen:
- EP-A- 0 108 260
- AT-B- 385 847
- DE-B- 2 555 975

## Beschreibung

Die Erfindung bezieht sich auf einen Meßförderer zum Transport eines langgestreckten Gegenstandes in seiner Längsrichtung durch eine quer zur Förderrichtung stehende Meßebene einer optoelektronischen Meßeinrichtung zum Erfassen der Maße des langgestreckten Gegenstandes, bestehend aus einer antreibbaren Kette, die mit Mitnehmern fest verbunden ist, welche von horizontal gelagerten, stationären Schienen geführt werden, und an ihrer Oberseite Auflageflächen zum Auflegen des zu vermessenden Gegenstandes aufweisen.

Um Beeinflussungen der Meßvorgänge in der Meßebene zu vermeiden, sind die als Meßförderer am häufigsten verwendeten Kettenförderer meist im Bereich der Meßebene geteilt. Dies stellt jedoch eine relativ aufwendige Lösung dar, weil dabei nicht nur ein zweiter synchron laufender Antrieb, sondern auch zusätzliche Umlenkrollen vorgesehen werden müssen.

Aus der AT-PS 385 847 ist ein Kettenförderer für eine optoelektronische Meßeinrichtung bekannt, bei dem die stationären Schienen für die mit der Transportkette verbundenen Mitnehmer im Bereich der Meßebene Unterbrechungsstellen zum Durchtritt von Lichtbündelabschnitten aufweisen. Die Schienenauflage der Mitnehmer ist breiter als die Weite der Unterbrechungsstellen, so daß diese von den Mitnehmern überbrückt werden können. Durch die Unterbrechungsstellen wird jedoch der kontinuierliche Kettenzug der Mitnehmer gestört und es entstehen Ratterbewegungen, welche die Fördergeschwindigkeit der zu vermessenden Gegenstände begrenzen.

Durch die in der Folge aufgezeigte erfindungsgemäße Ausführung wird ein Meßförderer der eingangs genannten Art bezweckt, bei dem die vorangeführten Nachteile vermieden werden können und der auf wirtschaftliche Art, auch bei relativ hoher Fördergeschwindigkeit, eine exakte Erfassung der Maße eines langgestreckten Gegenstandes mit eichfähiger Genauigkeit und hoher Zuverlässigkeit ermöglicht.

Dies wird dadurch erreicht, daß die horizontal gelagerten, stationären Schienen im Bereich der Meßebene aus der Horizontalen nach unten ausgebuchtet sind und die Mitnehmer so mit den stationären Schienen verbunden sind, daß im Verwendungsfall die Mitnehmer den nach unten ausgebuchteten Schienen folgen und somit unter dem zu vermessenden Gegenstand einen Freiraum zum Durchtritt der Meßstrahlen bilden.

Im Bereich der Meßebene folgen die Mitnehmer den nach unten gekrümmten bzw. gebogenen Schienen, die als Auflage und Gleitbahn für die Mitnehmer dienen. Dadurch wird zwischen dem zu vermessenden Gegenstand und dem die Meßebene passierenden Mitnehmer, auf dem sonst der Gegenstand aufliegt, ein Raum frei, so daß Meßstrahlen auch unter dem langgestreckten Gegenstand ungehindert durchtreten können.

In einer bevorzugten Ausführungsform ist die Kette als Rollenkette ausgebildet.

Mit der Rollenkette wird eine bessere seitliche Führung der Mitnehmer auf den stationären, längslaufenden Gleit- bzw. Steuerschienen als bei bekannten Förderern mit Gliederketten erreicht.

Bei einer Ausführung weisen die Mitnehmer an ihrer Unterseite zwei senkrecht abstehende, parallel zur Förderrichtung und symmetrisch angeordnete Laschen auf, an deren der Rollenkette abgewandten Seiten je eine Rolle drehbar gelagert ist, wobei die Rollen axial miteinander fluchten und jederRolle im ausgebuchteten Bereich der stationären Schienen eine mit der benachbarten Schiene festverbundene Bahn zugeordnet ist, deren gekrümmte Unterseite mit der Rolle zusammenwirkt.

Im Bereich der Meßebene werden dadurch die Mitnehmer zwangsläufig aus der Horizontalen nach unten gelenkt, womit zwischen Mitnehmer und dem zu vermessenden Gegenstand ein Freiraum zum Durchtritt der Meßstrahlen entsteht.

Bei einer bevorzugten Ausführungsform sind an der Unterseite der Mitnehmer U-förmige, die Rollenkette umgreifende und mit ihr fest verbundene Haken ausgebildet, und die Rollenkette steht im ausgebuchteten Bereich der stationären Schienen mit der gekrümmten Unterseite einer mit der einen Schienen fest verbundenen Leitbahn in Gleitverbindung.

Dadurch wird eine reibungsarme Umlenkung der Mitnehmer im Bereich der Meßebene erreicht, ohne zusätzliche Rollen und Bahnen vorsehen zu müssen.

Zur Minimierung der Reibung kann die Leitbahn auf ihrer mit der Rollenkette zusammenwirkenden Fläche eine Auflage aus Kunststoff, beispielsweise Polyamid, aufweisen.

In einer Weiterbildung können die Mitnehmer symmetrisch mit dem Steg eines U-förmigen Trägers fest verbunden sein, an dessen den stationären Schienen zugewandten Schenkelseiten je ein Rollenpaar drehbar gelagert ist, wobei deren Achsen in einer Ebene liegen und jedem Rollenpaar im ausgebuchteten Bereich der stationären Schienen eine mit der benachbarten Schiene festverbundene Leiste zugeordnet ist, an deren gekrümmter Unterseite sich das Rollenpaar abstützt.

Durch den Entfall von Schleifstellen ergibt sich bei dieser zwar aufwendigeren Ausführung ein leichtgängiger Meßförderer, bei dem Antriebsenergie eingespart werden kann und der Fördergeschwindigkeiten bis zu 150 m/Minute erlaubt.

Die seitliche Führung der Mitnehmer kann bei dieser Ausführung des Meßförderers optimiert werden, wenn die Rollen der Rollenpaare als Spurkranzrollen ausgebildet sind, deren Spurkranz mit Seitenflächen der stationären Schienen und im ausgebuchteten Bereich mit Seitenflächen der Leisten zusammenwirkt.

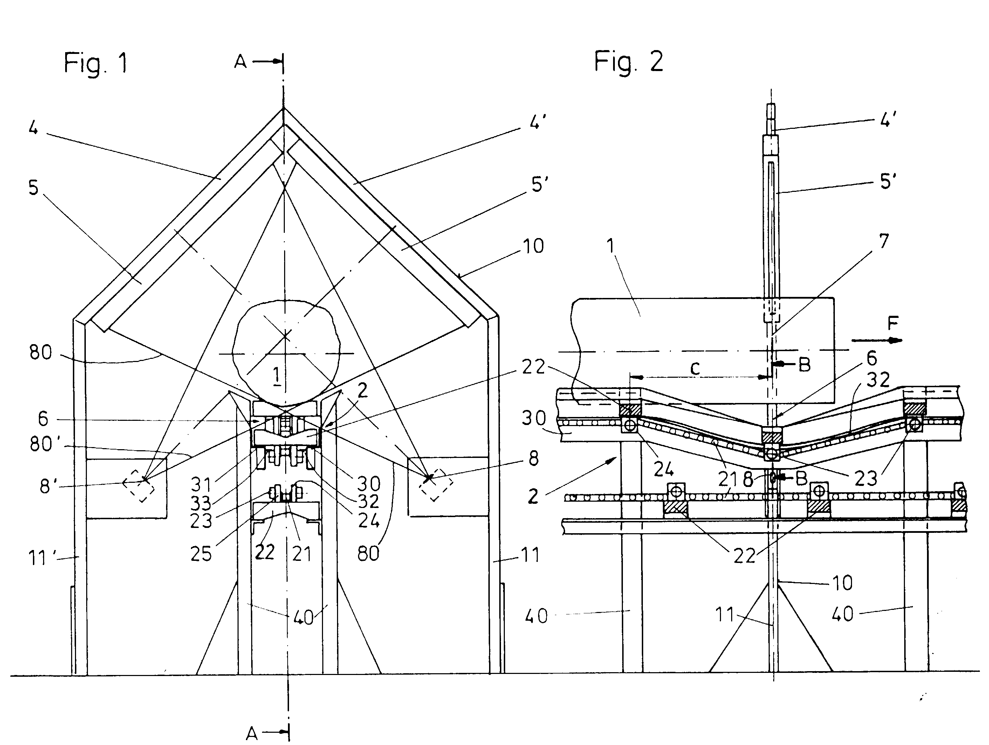

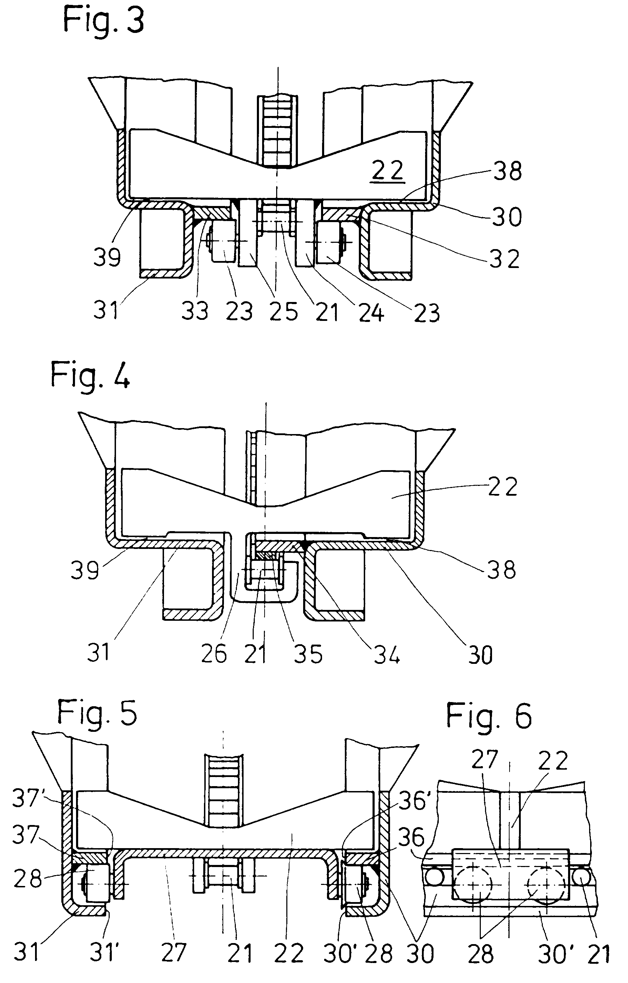

Im folgenden werden an Hand der beiliegenden Zeichnungen Ausführungsbeispiele des Erfindungsgegenstandes näher erläutert. Es zeigen: Fig. 1 den Aufriß einer optoelektronischen Meßeinrichtung zum Erfassen der Maße eines auf einem erfindungsgemäßen Meßförderer bewegten Holzstammes, wobei der Meßförderer im Schnitt gezeichnet ist, Fig. 2 die Schnittdarstellung der Meßeinrichtung gemäß der Linie A-A in Fig. 1, Fig. 3 den Schnitt längs der Linie B-B in Fig. 2, vergrößert dargestellt, Fig. 4 den Schnitt einer zweiten Ausführung des Meßförderers in der Meßebene, Fig. 5 den Schnitt einer dritten Ausführung des Meßförderers in der Meßebene und Fig. 6 den Seitenriß der Ausführung gemäß Fig. 5 mit nur einer dargestellten stationären Schiene.

In Fig. 1 ist schematisch eine optoelektronische Meßeinrichtung dargestellt, bei welcher ein Holzstamm 1 auf einem Meßförderer 2 in Richtung des Pfeiles F (Fig. 2) transportiert wird. Zum Erfassen der Durchmesser bzw. des Volumens des Holzstammes 1 ist ein aus Stehern 11, 11' und Meßbalken 4, 4' bestehendes Meßtor 10 vorhanden, durch welches der Holzstamm 1 fährt. Steher 11, 11' und Meßbalken 4, 4' bestehen aus Metallprofilen und sind fest miteinander verbunden. Die symmetrisch angeordneten Meßbalken 4, 4' schließen einen Winkel von 90° ein. Das Meßtor 10 ist senkrecht zu seiner Grundfläche aufgestellt und stabil verankert. Auf den der Meßebene 7 (Fig. 2) zugewandten Seitenflächen der Meßbalken 4, 4' ist je ein Empfangsbalken 5, 5' montiert. Im Inneren der Empfangsbalken 5, 5' ist etwa in einem Kreisbogen eine Reihe von Phototransistoren in engen konstanten Abständen angeordnet. Im Mittelpunkt des Kreisbogens der beiden Phototransistor-Reihen befindet sich in einem festen Abstand zu den Empfangsbalken 5, 5' je eine Lichtsende-Einheit 8, 8'.

Auf die Förderrichtung des Holzstammes 1 bezogen, vor dem Meßtor 10, befindet sich eine nicht dargestellte Infrarot-Lichtschranke. Soferne der Holzstamm 1 diese Infrarot-Lichtschranke durchfährt, werden die Meßvorgänge der optoelektronischen Meßeinrichtung ausgelöst, außerdem ist die Länge des Holzstammes 1 aus der Dauer der Unterbrechung der Infrarot-Lichtschranke und der Fördergeschwindigkeit des Meßförderers 2 exakt errechenbar. Eine Überwachung oder Aufnahme der Geschwindigkeit des Meßförderers 2 ist über einen mit dem Antrieb gekoppelten Impulsgeber möglich.

Nach Auslösung und einer eingestellten Verzögerung für jene Zeit, die der Holzstamm 1 braucht, um zur Meßebene 7 (Fig. 2) zu gelangen, beginnt der erste Meßvorgang. Von den beiden Lichtsende-Einheiten 8, 8' werden in einer Taktfrequenz fächerförmige Lichtblitze erzeugt, die in der Meßebene 7 liegen und als Lichtstrich auf den Phototransistor-Reihen der Empfangsbalken 5, 5' auftreffen, soferne nicht eine Abdunkelung durch den Holzstamm 1 erfolgt.

Auf Grund der gegebenen Geometrie der optoelektronischen Meßeinrichtung, d. h. feste Abstände zwischen den Phototransistor-Reihen und zugeordneten Lichtsende-Einheiten 8, 8' sowie den beiden Lichtsende-Einheiten 8, 8' und dem rechten Winkel zwischen den beiden Empfangsbalken 5, 5', können bei bekannter Kreisbogenlänge der Phototransistor-Reihen und Lage sowie Zahl der abgedunkelten Phototransistoren sowohl der Durchmesser, als auch die Entfernung des Mittelpunktes des Holzstammes 1 errechnet werden.

Die Auswertung erfolgt in einem Mikroprozessorsystem mit Speichereinheit.

Damit die Meßstrahlen 80, 80' nicht durch den Meßförderer 2 abgedunkelt werden, sind die stationären, von den Stehern 40 getragenen Schienen 30, 31 im Bereich der Meßebene 7 (Fig. 2) aus der Horizontalen nach unten ausgebuchtet. Die Mitnehmer 22 des Meßförderers 2, auf denen sonst der Holzstamm 1 aufliegt, folgen der Ausbuchtung der Schienen 30, 31 und bilden unter dem Holzstamm 1 einen Freiraum 6 zum ungehinderten Durchtritt der Meßstrahlen 80, 80'.

Der zwischen einem Aufgabeförderer und einem Sortierförderer horizontal angeordnete, etwa 12 m lange Meßförderer 2 besteht aus einer endlosen Rollenkette 21, beispielsweise gemäß DIN 8187, die zwischen Kettenrädern an den Enden des Meßförderers 2 eingespannt ist. Ein Kettenrad ist mit einem Motorantrieb verbunden, so daß die Rollenkette 21 im Betrieb des Meßförderers 2 oben in Förderrichtung F und unten entgegengesetzt mit konstanter Geschwindigkeit bewegt wird.

In gleichen Abständen voneinander sind mit der Rollenkette 21 Mitnehmer 22 fest verbunden, die an der Oberseite des Meßförderers 2 in Profilen von stationären Schienen 30, 31 geführt werden und als Auflage für die zu vermessenden Holzstämme 1 dienen. An der Unterseite des Meßförderers 2 werden die Mitnehmer 22 verkehrt zurück transportiert, wobei sie auf zwei mit den Stehern 40 fest verbundenen, horizontalen Winkel aufliegen.

Damit die Rollenkette 21 und die Mitnehmer 22 im Bereich der Meßebene 7 der Ausbuchtung der stationären Schienen 30, 31 folgen, weisen die Mitnehmer 22 an ihrer Unterseite zwei senkrecht abstehende, parallel zur Förderrichtung F und symmetrisch angeordnete Laschen 24, 25 auf, an deren der Rollenkette 21 abgewandten Seiten je eine Rolle 23 drehbar gelagert ist. Diese axial fluchtenden Rollen 23 rollen im ausgebuchteten Bereich der stationären Schienen 30, 31 auf der gekrümmten Unterseite einer ihr zugeordneten, mit der benachbarten Schiene 30; 31 fest verbundenen Bahn 32; 33 ab. Es versteht sich, daß die Unterseiten der Bahnen 32, 33 kantenfrei verlaufen, so daß beim Transport der Mitnehmer 22 keine Ratterbewegungen oder Stöße, sondern eine allmähliche Bewegung der Mitnehmer 22 aus der Horizontalen nach unten und nach dem Passieren der Meßebene 7 wieder nach oben in die Horizontale erfolgt.

In Fig. 2 ist der allmähliche Verlauf der stationären Schienen 30, 31 mit ihren Bahnen 32, 33 im Bereich der Meßebene 7 zu erkennen. Damit auch die seitlichen Ausladungen der Schienen 30, 31, die ein seitliches Wegrollen der Holzstämme 1 vom Meßförderer 2 verhindern sollen, die Meßstrahlen 80, 80' nicht behindern, verringern sich diese zur Meßebene 7 hin etwa auf die Breite der Mitnehmer 22.

In vergrößerter Darstellung ist in Fig. 3 ein Mitnehmer 22 gezeichnet, wie er gerade die Meßebene 7 passiert. Die Rollen 23 laufen unter Einwirkung der aus dem Rollenkettenzug entstandenen Kraftkomponente auf der Unterseite der Bahnen 32, 33. Zwischen den Schleif- bzw. Auflageflächen 38, 39 und dem Mitnehmer 22 ist ein Spalt entstanden, so daß die Mitnehmer 22 reibungsarm und stoßfrei durch die Meßebene 7 befördert werden.

Fig. 4 zeigt eine rollenfreie Ausführung der Mitnehmer 22. Jeder Mitnehmer 22 trägt an seiner Unterseite einen U-förmigen, die Rollenkette 21 umgreifenden Haken 26, mit dem die Rollenkette 21 verbunden ist. An der einen stationären Schiene 30, etwa in der Ebene der Schleif- bzw. Auflageflächen 38, 39, ist eine Leitbahn 34 angeschweißt oder befestigt, deren freie, im Schnitt nasenförmige Seite auf der Oberseite der Rollen der Rollenkette 21 aufliegt. Der Mitnehmer 22 passiert ebenfalls gerade die Meßebene 7, so daß unter Einwirkung der Kraftkomponente aus dem Rollenkettenzug die Rollen der Rollenkette 21 gegen die Leitbahn 34 bzw. deren Auflage 35 gedrückt werden. Zwischen Schleif- bzw. Auflageflächen 38, 39 und dem Mitnehmer 22 ist wiederum ein Spalt entstanden, so daß sich die gleichen Vorteile wie bei der Ausführung gemäß Fig. 3 ergeben.

Eine hinsichtlich der auftretenden Reibungskräfte minimierte Ausführung ist in Fig. 5 und 6 dargestellt. Die Mitnehmer 22 sind hier symmetrisch mit dem Steg eines U-förmigen Trägers 27 fest verbunden, an dessen den stationären Schienen 30, 31 zugewandten Schenkelseiten je ein Rollenpaar 28 drehbar gelagert ist. Die Rollenpaare 28 laufen auf einer Bahn der stationären Schienen 30, 31 und heben von dieser nur im Bereich der Ausbuchtung der stationären Schienen 30, 31 ab. In der gezeichneten Lage haben die Mitnehmer 22 gerade die Meßebene 7 passiert. Die Rollenpaare 28 werden daher durch die Kraftkomponente aus dem Rollenkettenzug gegen die Unterseite von Leisten 36 bzw. 37 gedrückt, die mit der jeweils benachbarten stationären Schiene 30 bzw. 31 fest verbunden sind. Von ihrer sonstigen Bahn auf den stationären Schienen 30, 31 haben die Rollenpaare 28 abgehoben. Die Rollen der Rollenpaare 28 sind bei der in der rechten Hälfte von Fig. 5-gezeigten Ausführung als Spurkranzrollen ausgebildet, die mit ihren Spurkränzen mit Seitenflächen 36', 37' der Leisten 36, 37 zusammenwirken. Außerhalb des ausgebuchteten Bereiches der stationären Schienen 30, 31 schleifen die Spurkränze an den Seitenflächen 30', 31' der stationären Schienen 30, 31. Ein seitliches Ausweichen der Mitnehmer 22 kann dadurch mit Sicherheit verhindert werden.

Mit der beschriebenen, mit einem erfindungsgemäßen Meßförderer 2 ausgestatteten elektronischen Meßeinrichtung gelingt die exakte Erfassung der Maße eines langgestreckten bewegten Gegenstandes, beispielsweise Holzstammes 1, auch wenn dieser eine Krümmung, einen Stammfuß oder Stammbeulen aufweist. Durch den stoßfreien und ruhigen Lauf der Mitnehmer 22 des Meßförderer 2 können nämlich Querbewegungen des Holzstammes 1, die die Meßergebnisse verfälschen würden, weitestgehend vermieden werden. Die optoelektronische Erfassung der Durchmesser aus zwei Richtungen über die Meßstrahlen 80, 80' ermöglicht außerdem eine rechnermäßige Ausschaltung von Querbewegungen des Holzstammes 1 und Ermittlung der Krummschaftigkeit. Das Mikroprozessorsystem ermittelt nämlich aus den empfangenen Signalen unter Berücksichtigung der Lage des Holzstammes 1 den jeweiligen Mittelpunkt der erfaßten Durchmesser über die ganze Länge des Holzstammes 1. Gegenüber bekannten Meßförderern mit Gliederketten weisen die Ausführungen des erfindungsgemäßen Meßförderers 2 eine wesentlich höhere Verschleißfestigkeit, auch bei höchsten Fördergeschwindigkeiten, auf. Weitere Vorteile hinsichtlich Schalldämmung und Zuverlässigkeit ergeben sich durch die Verwendung von Rollenketten 21 und die exakte Führung der Mitnehmer 22.

## Patentansprüche

1. Meßförderer (2) zum Transport eines langgestreckten Gegenstandes (1) in seiner Längsrichtung durch eine quer zur Förderrichtung (F) stehende Meßebene (7) einer optoelektronischen Meßeinrichtung (5, 5'; 8, 8') zum Erfassen der Maße des langgestreckten Gegenstandes (1), bestehend aus einer antreibbaren Kette (21), die mit Mitnehmern (22) fest verbunden ist, welche von horizontal gelagerten, stationären Schienen (30, 31) geführt werden, und an Ihrer Oberseite Auflageflächen zum Auflegen des zu vermessenden Gegenstandes (1) aufweisen, dadurch gekennzeichnet, daß die horizontal gelagerten, stationären Schienen (30, 31) im Bereich der Meßebene (7) aus der Horizontalen nach unten ausgebuchtet sind und die Mitnehmer (22) so mit den stationären Schienen (30, 31) verbunden sind, daß im Verwendungsfall die Mitnehmer (22) den nach unten ausgebuchteten Schienen (30, 31) folgen und somit unter dem zu vermessenden Gegenstand (1) einen Freiraum (6) zum Durchtritt der Meßstrahlen (80, 80') bilden.

2. Meßförderer nach Anspruch 1, dadurch gekennzeichnet, daß die Kette als Rollenkette (21) ausgebildet ist.

3. Meßförderer nach Anspruch 2, dadurch gekennzeichnet, daß die Mitnehmer (22) an ihrer Unterseite zwei senkrecht abstehende, parallel zur Förderrichtung (F) und symmetrisch angeordnete Laschen (24, 25) aufweisen, an deren der Rollenkette (21) abgewandten Seiten je eine Rolle (23) drehbar gelagert ist, wobei die Rollen (23) axial miteinander fluchten und jeder Rolle (23) im ausgebuchteten Bereich der stationären Schienen (30, 31) eine mit der benachbarten Schiene (30; 31) festverbundene Bahn (32; 33) zugeordnet ist, deren gekrümmte Unterseite mit der Rolle (23) zusammenwirkt.

4. Meßförderer nach Anspruch 2, dadurch gekennzeichnet, daß an der Unterseite der Mitnehmer (22) ein U-förmiger, die Rollenkette (21) umgreifender, mit ihr festverbundener Haken (26) ausgebildet ist, und die Rollenkette (21) im ausgebuchteten Bereich der stationären Schienen (30, 31) mit der gekrümmten Unterseite einer mit der einen Schiene (30) fest verbundenen Leitbahn (34) in Gleitverbindung steht.

5. Meßförderer nach Anspruch 4, dadurch gekennzeichnet, daß die Leitbahn (34) auf ihrer mit der Rollenkette (21) zusammenwirkenden Fläche eine Auflage (35) aus Kunststoff aufweist.

6. Meßförderer nach Anspruch 1 oder 2, dadurch gekennzeichnet, daß die Mitnehmer (22) symmetrisch mit dem Steg eines U-förmigen Trägers (27) fest verbunden sind, an dessen den stationären Schienen (30; 31) zugewandten Schenkelseiten je ein Rollenpaar (28) drehbar gelagert ist, wobei deren Achsen in einer Ebene liegen und jedem Rollenpaar (28) im ausgebuchteten Bereich der stationären Schienen (30, 31) eine mit der benachbarten Schiene (30; 31) festverbundene Leiste (36; 37) zugeordnet ist, an deren gekrümmter Unterseite sich das Rollenpaar (28) abstützt.

7. Meßförderer nach Anspruch 6, dadurch gekennzeichnet, daß die Rollen der Rollenpaare (28) als Spurkranzrollen ausgebildet sind, deren Spurkranz mit Seitenflächen (30'; 31') der stationären Schienen (30; 31) und im ausgebuchteten Bereich mit Seitenflächen (36'; 37') der Leisten (36; 37) zusammenwirkt.

## Claims

1. Conveyor (2) for the transport of an elongated object (1) in its longitudinal direction trough a measuring plane (7), standing transversely to the conveying direction (F), of an optoelectronic measuring device (5, 5'; 8, 8') for the detection of the dimensions of the elongated object (1), comprising a drivable chain (21) which is firmly connected to dogs (22) which are guided by horizontally supported, stationary rails (30, 31) and have on their upper side bearing surfaces for resting the object (1) to be measured, characterized in that the horizontally supported, stationary rails (30, 31) are bowed downwards out of the horizontal in the region of the measuring plan (7) and the dogs (22) are connected to the stationary rails (30, 31) in such a way that, when used, the dogs (22) follow the rails (30, 31) which are bowed downwards and thus form a free space (6) under the object (1) to be measured for the passage of the measuring beams (80, 80').

2. Conveyor according to Claim 1, characterized in that the chain is designed as a roller chain (21).

3. Conveyor according to Claim 2, characterized in that the dogs (22) have on their underside two perpendicularly protruding side plates (24, 25) which are arranged symmetrically and parallel to the conveying direction (F), and on whose sides facing away from the roller chain (21) a roller (23) is in each case rotatably supported, the rollers (23) aligning axially with each other and each roller (23), in the bowed-out region of the stationary rails (30, 31), having assigned to it a track (32; 33) which is firmly connected to the neighbouring rail (30; 31) and whose curved underside interacts with the roller (23).

4. Conveyor according to Claim 2, characterized in that a U-shaped hook (26), which engages around the roller chain (21) and is firmly connected to it, is designed on the underside of the dogs (22), and the roller chain (21), in the bowed-out region of the stationary rails (30, 31), is in sliding connection with the curved underside of a guiding track (34) which is firmly connected to one rail (30).

5. Conveyor according to Claim 4, characterized in that the guiding track (34) has a rest (35) made of plastic on its surface interaction with the roller chain (21).

6. Conveyor according to Claim 1 or 2, characterized in that the dogs (22) are symmetrically firmly connected to the web of a U-shaped carrier (27) on whose limb sides facing the stationary rails (30; 31) there is rotatably supported in each case a pair of rollers (28), their axles lying in one plane and each pair of rollers (28) having assigned to it, in the bowed-out region of the stationary rails (30, 31), a strip (36; 37) which is firmly connected to the neighbouring rail (30; 31) and on whose curved underside the pair of rollers (28) is supported.

7. Conveyor according to Claim 6, characterized in that the rollers of the pairs of rollers (28) are designed as flange rollers whose flange interacts with lateral surfaces (30', 31') of the stationary rails (30; 31) and, in the bowed-out region, with lateral surfaces (36'; 37') of the strips (36; 37).

## Revendications

1. Transporteur de mesure (2) pour le transport d'un objet (1), de forme allongée, selon sa direction longitudinale, à travers un plan de mesure (7), perpendiculaire à la direction du transport (F), d'un dispositif de mesure opto-électronique (5, 5'; 8, 8') pour saisir les dimensions de l'objet (1) de forme allongée, constitué d'une chaîne (21) qui peut être entraînée et qui est solidairement reliée à des entraîneurs (22) qui sont guidés par des rails fixes (30, 31) placés horizontalement et présentent sur leur face supérieure des surfaces d'appui pour l'appui de l'objet à mesurer (1), caractérisé par le fait que les rails fixes (30, 31), placés horizontalement, forment une excroissance courbe vers le bas, hors de l'horizontale, dans la zone du plan de mesure (7) et que les entraîneurs (22) sont reliés avec les rails fixes (30, 31) de façon que, dans le cas d'application, les entraîneurs (22) suivent les rails (30, 31), formant une excroissance courbe vers le bas, et forment ainsi, sous l'objet à mesurer (1), un espace libre (6) pour le passage des rayons lumineux de mesure (80, 80').

2. Transporteur de mesure selon la revendication 1, caractérisé par le fait que la chaîne est conçue en tant que chaîne à rouleaux (21).

3. Transporteur de mesure selon la revendication 2, caractérisé par le fait que les entraîneurs (22) présentent, à leur face inférieure, deux pattes (24, 25) qui viennent verticalement en saillie, sont disposées parallèlement à la direction du transport (F) et symétriquement et contre chacune des faces, situées du côté opposé à la chaîne à rouleaux (21), desquelles porte, avec liberté de rotation, un galet (23), étant précisé que les galets (23) sont alignés axialement l'un avec l'autre et qu'à chaque galet (23) correspond, dans la zone des rails fixes (30, 31) qui forme une excroissance courbe, un chemin (32; 33) qui est solidarisé avec le rail voisin (30; 31) et dont la face inférieure, incurvée, collabore avec le galet (23).

4. Transporteur de mesure selon la revendication 2, caractérisé par le fait que sur la face inférieure des entraîneurs (22) est formé un crochet (26) en forme de U, enserrant la chaîne à rouleau (21) et solidarisé avec elle, et que, dans la zone des rails fixes (30, 31) en excroissance courbe, la chaîne à rouleaux (21) est en liaison glissante avec la face inférieure, incurvée, d'un chemin de guidage (34) solidarisé avec l'un des rails (30).

5. Transporteur de mesure selon la revendication 4, caractérisé par le fait que le chemin de guidage (34) présente, sur sa surface collaborant avec la chaîne à rouleaux (21), une garniture (35) en plastique.

6. Transporteur de mesure selon la revendication 1 ou 2, caractérisé par le fait que les entraîneurs (22) sont solidarisés symétriquement avec la traverse d'un support (27) en forme de U, contre chacune des faces, orientées vers les rails fixes (30; 31), des ailes duquel porte, avec liberté de rotation, une paire de galets (28), étant précisé que leurs axes sont situés dans un plan et qu'à chaque paire de galets (28) correspond, dans la zone des rails fixes (30, 31) formant excroissance courbe, un plat (36; 37) qui est solidarisé avec le rail voisin (30; 31) et contre la face inférieure, incurvée, duquel s'appuie la paire de galets (28).

7. Transporteur de mesure selon la revendication 6, caractérisé par le fait que les galets de la paire de galets (28) sont conçus en tant que galets à boudin dont le boudin collabore avec les surfaces latérales (30'; 31') des rails fixes (30; 31) et, dans la zone formant excroissance courbe, avec les surfaces latérales (36'; 37') des plats (36; 37).
